# EUROPEAN PATENT SPECIFICATION

(11) **EP 1 941 695 B1**
(45) Date of publication and mention of the grant of the patent: **07.12.2011**
(21) Application number: 05801675.9
(22) Date of filing: 28.10.2005
(51) Int. Cl.: H04L 29/06, H04L 12/18

(54) **MEDIA SHARING**
MEDIEN-SHARING
PARTAGE DE MEDIA

(43) Date of publication of application: 09.07.2008
(73) Proprietor: Telefonaktiebolaget L- M Ericsson (publ), 164 83 Stockholm (SE)
(72) Inventor: HOLM, Jan, S-748 40 Örbyhus (SE); ALBERTSSON, Henrik, S-118 24 Stockholm (SE); PRZYBYSZ, Hubert, S-126 37 Stockholm (SE)
(74) Representative: Mitchell, Matthew Benedict David
(86) International application number: PCT/EP2005/055628
(87) International publication number: WO 2007/048448

(56) References cited:
- US-B1- 6 430 602
- ANONYMOUS: "Push-to-talk enabled media server" RESEARCH DISCLOSURE, MASON PUBLICATIONS, HAMPSHIRE, GB, vol. 495, no. 39, July 2005 (2005-07), XP007135269 ISSN: 0374-4353

## Description

### Field of the Invention

The present invention relates to a method and apparatus for sharing media in a push-to-talk type session.

### Background to the Invention

Walkie-talkie type services have long proved popular amongst users who wish to communicate brief messages quickly between one another. Conventionally, such services have been provided by two-way portable radios which utilise a dedicated part of the radio spectrum, but which only allow users to communicate with a small group of pre-selected users who utilise similar terminals and who are within range of the relatively short operating range of the radios. More recently, services have been introduced into the United States which piggy-back on the existing cellular telephone infrastructure. However, these services have been proprietary in nature and have not allowed users to communicate between different operator networks.

In an attempt to broaden the use of walkie-talkie type services, an industry grouping known as the Open Mobile Alliance (www.openmobilealliance.org) has been established with the aim of standardising suitable protocols which will allow inter-network operability for Walkie-Talkie services offered over cellular networks. The service established by the various standards is known as Push to talk Over cellular (PoC). PoC makes use of the IP Multimedia Subsystem (IMS) to handle the setting up and control of PoC sessions via PoC servers (acting as SIP ASs). PoC proposes that associated speech data will be transported over a packet switched access network. In the case of GSM and UMTS, this will be the general packet radio service (GPRS) access network. In other network architectures, analogous packet switched access networks will be utilised for transporting talk data. Push to Talk services may also be offered over circuit switched access networks, although this is not the preferred option. The current state of PoC is set out in Release 1.0.

The requirements for PoC Release 2 are now being laid out. These include a requirement for sharing media content between PoC Users in a PoC Session, i.e. a push-to-watch type service. The media can be stored on the user equipment (the "PoC Client") or on a content server in the network.

### Summary of the Invention

The present invention relates to push-to-talk type services such as for example Push to talk Over cellular (PoC), as well as to related and enhanced services which are also burst based services. The term "burst-based" service is used here as a generic name for these services.

According to a first aspect of the present invention there is provided a method of distributing media from a network based content server to two or more clients participating in a push-to-talk type service session, the method comprising:
following establishment of said session, joining the content server to the session as a further participating client;
sending a media burst granted message from a controlling server to the content server; and
delivering the requested media, the requested media requested by the controlling session server, from the content server to the other participating clients.

The invention is applicable in particular to distributing media from a network based content server to clients participating in a Push to talk Over cellular (PoC) session, according to PoC Release 1.0, 2.0, or future enhancements of the same protocols.

Preferably, said push-to-talk type service session is established using the Session Initiation Protocol (SIP) signalling, and said content server is joined to the session as a further participating client by sending a SIP INVITE to the content server. The SIP INVITE may be sent from a controlling SIP Application Server as a result of that Server receiving a SIP REFER message from one of the participating clients. More preferably, the SIP REFER contains in the Refer-To header a SIP URI identifying the content server.

The requested media may be identified by a URI parameter appended to the URI of the content server. Alternatively, the media may be identified in an "escaped" header field of the SIP REFER message.

Preferably, after the distribution of media from the content server has been completed, the content server is removed from the ongoing session. Where SIP protocol is used to establish the session and add the content server as a participating client, the content server may be removed by one of the participating clients sending SIP REFER (BYE) request to the controlling server. Alternatively, the content server may remove itself by sending a SIP BYE request to the controlling server.

According to a second aspect of the present invention there is provided a client terminal which is able to participate in a push-to-talk type service session with one or more other client terminals, the terminal comprising:
means for establishing a push-to-talk type service session with one or more other client terminals;
means for subsequently causing an invitation to the ongoing session to be sent from a controlling session server to a network based content server, the invite identifying media to be shared with the participating client terminals; and
means for receiving the identified media from the content server after the content server has joined the session as a participating client.

According to a third aspect of the present invention there is provided a content server for use in distributing media to two or more clients participating in an ongoing push-to-talk type service session, the server comprising:
means for joining the content server to the ongoing session as a participating client; and
means for receiving a media burst granted message from a controlling session server; and
means for sending the requested media, the requested media requested by the controlling session server, for delivery to the other participating clients.

According to a fourth aspect of the present invention there is provided a method of distributing media from a network based content server to two or more clients participating in a push-to-talk type service session controlled by a session controlling server, the method comprising:
following establishment of said session, sending an HTTP request from the session controlling server to the content server;
upon receipt of said request at the content server, identifying media identified in the HTTP request; and
delivering the identified media from the content server to the participating clients.

Preferably, said push-to-talk type service session is established using the Session Initiation Protocol (SIP) signalling. The method comprises one of the participating clients sending to said controlling server a Media Burst request containing an HTTP URL identifying the content server. In response to receipt of this message, the session controlling server generates and sends said HTTP request. The media identified by the content server is returned to the session controlling server which distributes the media to the participating clients.

According to a fifth aspect of the present invention there is provided a session controlling server for use in controlling a push-to-talk type service session involving two or more participating clients, the server comprising:
means for establishing a session between two or more participating clients;
means for receiving from one of said clients a Media Burst request containing an HTTP URL identifying a content server at which media is stored;
means for generating and sending to said content server an HTTP request;
means for receiving media from said content server, and for delivering the media to the participating clients.

According to a sixth aspect of the present invention there is provided a user terminal for use in a push-to-talk type service session involving one or more other participating client terminals, the terminal comprising:
means for sending to a controlling server, a Media Burst request containing an HTTP URL identifying a content server at which media is stored, during an ongoing session with one or more other participating client terminals; and
means for receiving media from said content server via said controlling server.

### Brief Description of the Drawings

Figure 1 shows a signal flow sequence according to a first embodiment of the invention; and
Figure 2 shows a signal flow sequence according to a second embodiment of the invention.

### Detailed Description of a Preferred Embodiment

The following discussion presents two solutions to the problem of enabling a content server to distribute one or more media types to the participants in a Push-to-talk over Cellular (PoC) session. In order to facilitate this media sharing, three main issues must be addressed:
How does the PoC Server understand that a user wants to share media?
How does the PoC User identify the media?
How does the PoC User instruct the content server what to share in the PoC Session.

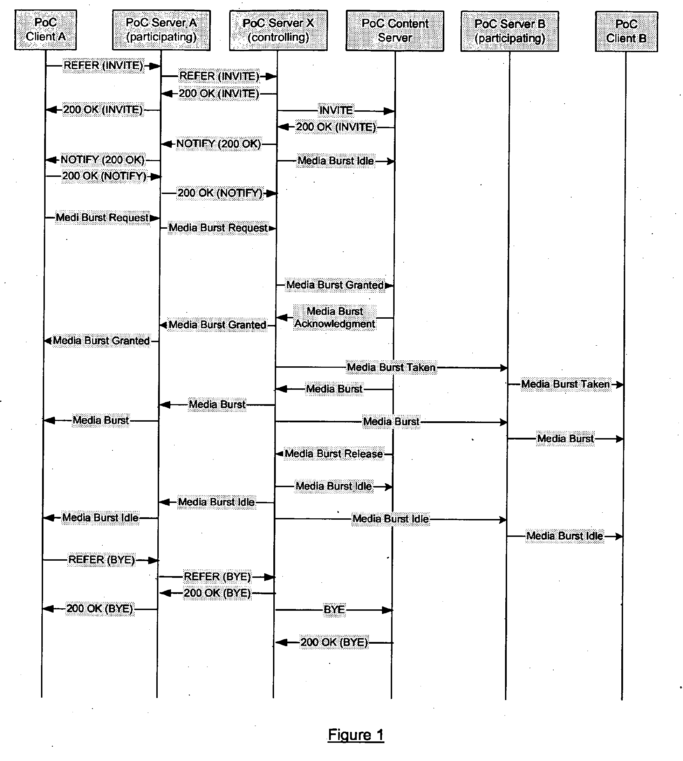

A first approach involves adding the content server as a PoC Client to the PoC Session, so that the content server is (temporarily) added to the PoC Session. To illustrate this approach, consider an ongoing PoC session between PoC Clients A and B, where each PoC Client has a participating PoC Server (PoC Servers A and B), and the session is controlled by a controlling PoC Server (PoC Server X). Figure 1 shows the main SIP requests and SIP responses associated with this approach, where the PoC Release 1.0 names "Talk Burst Request", "Talk Burst Idle", etc. are changed to the generic names "Media Burst Request", "Media Burst Idle", etc. The message sequence is as follows:

PoC Client A sends a SIP REFER request in order to add (INVITE) the content server to the ongoing PoC Session. The SIP REFER request includes in the "Refer-To" header, the URI of the content server holding the media being requested. The media itself is also identified by a Universal Resource Indicator (URI) parameter in the address of the content server or is identified within an "escaped" header field.

PoC Server X receives the SIP REFER request and as a consequence invites the PoC Content Server as if it was an ordinary PoC User using the SIP INVITE.

The Content server accepts the invitation and sends the SIP 200 OK (INVITE) response. The PoC Server X sends a SIP NOTIFY request to the PoC Client to indicate that the Content Server has accepted.

On receipt of the SIP NOTIFY request indicating that the content server has accepted the invitation, the PoC Client A can request permission to send, for example, a picture on the behalf of the content server. This is done using the Media Burst Request message.

The PoC Server X grants the request and notifies both PoC Client A and the content server (Media Burst Granted message), as well as PoC Client B (Media Burst Taken message).

The content server sends the media to the PoC Server (Media Burst), and the PoC Server X distributes the media to all participants that are capable to receiving this type of media.

Once the media has been sent, the content server sends the Media Burst Release message and the PoC Server distributes the information (Media Burst Idle) that the floor is idle for this media type.

When the PoC Client A receives the Media Burst Idle message it can expel the content server from the PoC session by means of a SIP REFER (BYE) request. An alternative means to achieve the same result is for the content server to leave the PoC Session by means of a SIP BYE request.

The solution illustrated in Figure 1 has the advantage that neither the PoC Client nor the PoC Servers in the network need to identify that the content server is a PoC Client.

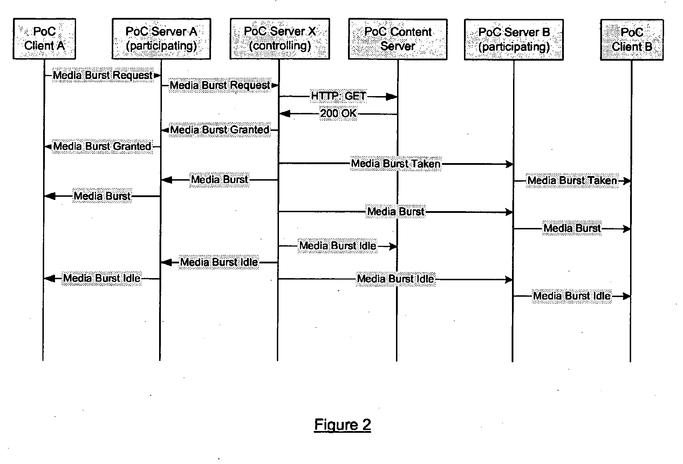

An alternative solution to the problem of enabling a content server to distribute one or more media types to the participants in a PoC session makes use of an HTTP URL instead of a SIP address to identify the media to be shared. Assume for example that a user has stored some media on a content server or is surfing a round on the Internet and finds some interesting media (e.g. a picture, an audio-clip, video-clip, etc.) that he or she wants to share. Figure 2 shows a simplified message flow for implementing this approach. The message flow is as follows.

The PoC Client A sends a Media Burst Request message requesting permission to send media (e.g. a picture) on behalf of another user. The address of the other user is an HTTP URL, for example "http://my-content-op.net/user/~u29502467/pictures/vacation05/kalle.jpg".

When the PoC Server X receives the Media Burst Request message containing the HTTP address (instead of a SIP URI), it sends an HTTP GET request to the content server.

The content server returns the file identified by the HTTP GET request in the HTTP 200 "OK" response.

The PoC Server X sends a Media Burst Granted message to PoC Client A and Media Burst Taken message to the PoC Client B and starts transmitting the media (Media Burst).

Once the media has been distributed, the PoC Server X sends Media Burst Idle message to the participants (including the content server) to indicate that some one else may ask for permission to send media.

While the media sharing process is ongoing, one or other of the PoC Users can ask the controlling PoC server X for permission to send a Talk Burst during which the PoC User at PoC Client A could talk about the shared picture with the PoC User at PoC Client B. This case is not shown in the example.

The alternative solution (of Figure 2) has the advantage that the signalling requirements are minimal. Another advantage is that this solution can be used to share media stored on any PoC "unaware" web server as long as the (controlling) PoC Server is authorized to fetch the media. On the other hand, it can only be used to share media of finite size: It is not possible to use the solution, for example, to share streaming video.

It will be appreciated by the person of skill in the art that various modifications may be made to the above described embodiments without departing from the scope of the present invention. For example, whilst the invention has been illustrated above with reference to PoC, the invention is applicable to other burst-type services such as, for example, instant messaging services.

## Claims

1. A method of distributing media from a network based content server to two or more clients participating in a push-to-talk type service session, the method comprising:
following establishment of said session, joining the content server to the session as a further participating client;
sending a media burst granted message from a controlling session server to the content server; and
delivering requested media, the requested media requested by the controlling session server, from the content server to the other participating clients.

2. A method according to claim 1, wherein said burst-based service is Push to talk Over cellular.

3. A method according to claim 1 or 2, wherein said push-to-talk type service session is established using the Session Initiation Protocol, SIP, signalling, and said content server is joined to the session as a further participating client by sending a SIP INVITE to the content server.

4. A method according to claim 3, wherein the SIP INVITE is sent from a controlling SIP Application Server as a result of that Server receiving a SIP REFER message from one of the participating clients.

5. A method according to claim 4, wherein the SIP REFER contains in the Refer-To header a SIP URI identifying the content server.

6. A method according to claim 5, wherein the requested media is identified by a URI parameter appended to the URI of the content server.

7. A method according to claim 5, wherein the media is identified in an "escaped" header field of the SIP REFER message.

8. A method according to any one of the preceding claims and comprising removing the content server from the ongoing session after the distribution of media from the content server has been completed.

9. A method according to claim 8 when appended to claim 3, wherein the content server is removed by one of the participating clients sending a SIP REFER (BYE) request to the controlling server.

10. A method according to claim 8 when appended to claim 3, wherein the content server is removed by the content server sending a SIP BYE request to the controlling server.

11. A client terminal which is able to participate in a push-to-talk type service session with one or more other client terminals, the terminal comprising:
means for establishing a push-to-talk type service session with one or more other client terminals;
means for subsequently causing an invitation to the ongoing session to be sent from a controlling session server to a network based content server, the invite identifying media to be shared with the participating client terminals; and
means for receiving the identified media from the content server after the content server has joined the session as a participating client.

12. A content server for use in distributing media to two or more clients participating in an ongoing push-to-talk type service session, the server comprising:
means for joining the content server to the ongoing session as a participating client; and
means for receiving a media burst granted message from a controlling session server; and
means for sending the requested media, the requested media requested by the controlling session server, for delivery to the other participating clients.

13. A method of distributing media from a network based content server to two or more clients participating in a push-to-talk type service session controlled by a session controlling server, the method comprising:
following establishment of said session, sending an HTTP protocol request from the session controlling server to the content server;
upon receipt of said request at the content server, identifying media identified in the HTTP request; and
delivering the identified media from the content server to the participating clients.

14. A method according to claim 13, wherein said push-to-talk type service session is established using the Session Initiation Protocol, SIP, signalling.

15. A method according to claim 13 or 14 and comprising sending from one of the participating clients to said controlling server, a Media Burst request containing an HTTP URL identifying the content server and, in response to receipt of this message, generating at the session controlling server said HTTP request and sending this to the content server.

16. A method according to any one of claims 13 to 15, wherein said HTTP request is an HTTP GET.

17. A session controlling server for use in controlling a push-to-talk type service session involving two or more participating clients, the server comprising:
means for establishing a session between two or more participating clients;
means for receiving from one of said clients a Media Burst request containing an HTTP URL identifying a content server at which media is stored;
means for generating and sending to said content server an HTTP request;
means for receiving media from said content server, and for delivering the media to the participating clients.

18. A user terminal for use in a push-to-talk type service session involving one or more other participating client terminals, the terminal comprising:
means for sending to a controlling server, a Media Burst request containing an HTTP URL identifying a content server at which media is stored, during an ongoing session with one or more other participating client terminals; and
means for receiving media from said content server via said controlling server.

## Patentansprüche

1. Verfahren zum Verteilen von Medien von einem netzbasierten Inhaltsserver an zwei oder mehr Clients, die an einer Sitzung einer Art von Push-to-Talk-Dienst teilnehmen, wobei das Verfahren Folgendes umfasst:
nach Aufbau der Sitzung den Inhaltsserver als einen weiteren teilnehmenden Client in die Sitzung aufnehmen;
Senden einer Medien-Burst-Bewilligungsnachricht von einem steuernden Sitzungsserver an den Inhaltsserver; und
Versenden der angeforderten Medien, der angeforderten Medien, die vom steuernden Sitzungsserver angefordert werden, vom Inhaltsserver an die anderen teilnehmenden Clients.

2. Verfahren nach Anspruch 1, worin der burstbasierte Dienst ein Push-to-Talk over Cellular ist.

3. Verfahren nach Anspruch 1 oder 2, worin die Push-to-Talk-Dienstsitzung unter Verwendung der SIP(Sitzungsinitiierungsprotokoll)-Signalisierung aufgebaut wird und der Inhaltsserver als ein weiterer teilnehmender Client in die Sitzung aufgenommen wird, indem ein SIP INVITE an den Inhaltsserver gesendet wird.

4. Verfahren nach Anspruch 3, worin das SIP INVITE von einem steuernden SIP-Anwendungsserver als ein Ergebnis davon gesendet wird, dass dieser Server eine SIP REFER-Nachricht von einem der teilnehmenden Clients empfängt.

5. Verfahren nach Anspruch 4, worin das SIP REFER im Refer-To-Header einen SIP URI enthält, der den Inhaltsserver identifiziert.

6. Verfahren nach Anspruch 5, worin die angeforderten Medien durch einen URI-Parameter identifiziert werden, der an den URI des Inhaltsservers angehängt ist.

7. Verfahren nach Anspruch 5, worin die Medien in einem "Escaped"-Header-Feld der SIP REFER-Nachricht identifiziert sind.

8. Verfahren nach einem der vorhergehenden Ansprüche, außerdem das Entfernen des Inhaltsservers aus der laufenden Sitzung umfassend, nachdem die Verteilung von Medien vom Inhaltsserver abgeschlossen ist.

9. Verfahren nach Anspruch 8, wenn an Anspruch 3 angehängt, worin der Inhaltsserver dadurch entfernt wird, dass einer der teilnehmenden Clients eine SIP REFER (BYE)-Anforderung an den steuernden Server sendet.

10. Verfahren nach Anspruch 8, wenn an Anspruch 3 angehängt, worin der Inhaltsserver dadurch entfernt wird, dass der Inhaltsserver eine SIP BYE-Anforderung an den steuernden Server sendet.

11. Client-Endgerät, das befähigt ist, an einer Push-to-Talk-Dienstsitzung mit einem oder mehreren anderen Client-Endgeräten teilzunehmen, wobei das Endgerät Folgendes umfasst:
Mittel zum Aufbauen einer Push-to-Talk-Dienstsitzung mit einem oder mehreren anderen Client-Endgeräten;
Mittel, um nachfolgend zu veranlassen, dass eine Einladung in die laufende Sitzung von einem steuernden Sitzungsserver an einen netzbasierten Inhaltsserver gesendet wird, wobei die Einladung Medien identifiziert, die mit den teilnehmenden Client-Endgeräten gemeinsam genutzt werden sollen; und
Mittel zum Empfangen der identifizierten Medien vom Inhaltsserver nachdem der Inhaltsserver der Sitzung als ein teilnehmender Client beigetreten ist.

12. Inhaltsserver zur Verwendung beim Verteilen von Medien an zwei oder mehr Clients, die an einer laufenden Push-to-Talk-Dienstsitzung teilnehmen, wobei der Server Folgendes umfasst:
Mittel, um den Inhaltsserver als einen teilnehmenden Client in die laufende Sitzung aufzunehmen; und
Mittel zum Empfangen einer Medien-Burst-Bewilligungsnachricht von einem steuernden Sitzungsserver; und
Mittel zum Senden der angeforderten Medien, der angeforderten Medien, die vom steuernden Sitzungsserver angefordert werden, zum Versenden an die anderen teilnehmenden Clients.

13. Verfahren zum Verteilen von Medien von einem netzbasierten Inhaltsserver an zwei oder mehr Clients, die an einer Push-to-Talk-Dienstsitzung teilnehmen, die von einem Sitzungssteuerungsserver gesteuert wird, wobei das Verfahren Folgendes umfasst:
nach Aufbau der Sitzung eine HTTP-Protokollanforderung vom Sitzungssteuerungsserver an den Inhaltsserver senden;
nach Empfang der Anforderung am Inhaltsserver das Identifizieren der Medien, die in der HTTP-Anforderung identifiziert sind; und
Versenden der identifizierten Medien vom Inhaltsserver an die teilnehmenden Clients.

14. Verfahren nach Anspruch 13, worin die Push-to-Talk-Dienstsitzung unter Verwendung der SIP(Sitzungsinitiierungsprotokoll)-Signalisierung aufgebaut wird.

15. Verfahren nach Anspruch 13 oder 14, außerdem umfassend, dass eine Medien-Burst-Anforderung, die einen den Inhaltsserver identifizierenden HTTP URL enthält, von einem der teilnehmenden Clients an den steuernden Server gesendet wird und dass als Antwort auf den Empfang dieser Nachricht am Sitzungssteuerungsserver die HTTP-Anforderung erzeugt wird und diese an den Inhaltsserver gesendet wird.

16. Verfahren nach einem der Ansprüche 13 bis 15, worin die HTTP-Anforderung ein HTTP GET ist.

17. Sitzungssteuerungsserver zur Verwendung beim Steuern einer Push-to-Talk-Dienstsitzung, an der ein oder mehrere teilnehmende Clients beteiligt sind, wobei der Server Folgendes umfasst:
Mittel zum Aufbauen einer Sitzung zwischen zwei oder mehr teilnehmenden Clients;
Mittel, um von einem der Clients eine Medien-Burst-Anforderung zu empfangen, die einen HTTP URL enthält, der einen Inhaltsserver identifiziert, bei dem Medien gespeichert sind;
Mittel, um eine HTTP-Anforderung zu erzeugen und an den Inhaltsserver zu senden;
Mittel, um Medien vom Inhaltsserver zu empfangen und die Medien an die teilnehmenden Clients zu senden.

18. Teilnehmerendgerät zur Verwendung in einer Push-to-Talk-Dienstsitzung, an der ein oder mehrere andere teilnehmende Client-Endgeräte beteiligt sind, wobei das Endgerät Folgendes umfasst:
Mittel, um während einer laufenden Sitzung mit einem oder mehreren anderen teilnehmenden Client-Endgeräten an einen steuernden Server eine Medien-Burst-Anforderung zu senden, die einen HTTP URL enthält, der einen Inhaltsserver identifiziert, bei dem Medien gespeichert sind; und
Mittel zum Empfangen von Medien vom Inhaltsserver über den steuernden Server.

## Revendications

1. Procédé de distribution de média d'un serveur de contenu basé sur le réseau à deux clients ou plus participant à une session de service de type pousser pour parler, le procédé consistant à :
à la suite de l'établissement de ladite session, joindre le serveur de contenu à la session en tant qu'autre client participant ;
envoyer un message d'accord de salve de média d'un serveur de session de commande au serveur de contenu ; et
délivrer le média demandé, le média demandé étant demandé par le serveur de session de commande, du serveur de contenu aux autres clients participants.

2. Procédé selon la revendication 1, dans lequel ledit service à base de salves est un service de type pousser pour parler sur cellulaire.

3. Procédé selon la revendication 1 ou 2, dans lequel ladite session de service de type pousser pour parler est établie en utilisant la signalisation SIP, Session Initiation Protocol, et ledit serveur de contenu est joint à la session en tant qu'autre client participant en envoyant un message SIP INVITE au serveur de contenu.

4. Procédé selon la revendication 3, dans lequel le message SIP INVITE est envoyée à partir d'un serveur d'application SIP de commande en conséquence de la réception par ce serveur d'un message SIP REFER de l'un des clients participants.

5. Procédé selon la revendication 4, dans lequel le message SIP REFER contient dans l'en-tête Refer-To une URI SIP identifiant le serveur de contenu.

6. Procédé selon la revendication 5, dans lequel le média demandé est identifié par un paramètre d'URI joint à l'URI du serveur de contenu.

7. Procédé selon la revendication 5, dans lequel le média est identifié dans un champ d'en-tête « escaped » du message SIP REFER.

8. Procédé selon l'une quelconque des revendications précédentes et comprenant le retrait du serveur de contenu de la session en cours à la fin de la distribution du média à partir du serveur de contenu.

9. Procédé selon la revendication 8 lorsqu'elle est jointe à la revendication 3, dans lequel le serveur de contenu est retiré par l'envoi par l'un des clients participants d'une demande SIP REFER (BYE) au serveur de commande.

10. Procédé selon la revendication 8 lorsqu'elle est jointe à la revendication 3, dans lequel le serveur de contenu est retiré par l'envoi par le serveur de contenu d'une demande SIP BYE au serveur de commande.

11. Terminal de client qui est capable de participer à une session de service pousser pour parler avec un ou plusieurs autres terminaux de client, le terminal comprenant :
des moyens pour établir une session de service de type pousser pour parler avec un ou plusieurs autres terminaux de client ;
des moyens pour provoquer par la suite l'envoi d'une invitation à la session en cours d'un serveur de session de commande à un serveur de contenu basé sur le réseau, l'invite identifiant le média à partager avec les terminaux de client participants ; et
des moyens pour recevoir le média identifié du serveur de contenu après que le serveur de contenu s'est joint à la session en tant que client participant.

12. Serveur de contenu pour une utilisation pour distribuer un média à deux clients ou plus participant à une session de service de type pousser pour parler en cours, le serveur comprenant :
des moyens pour joindre le serveur de contenu à la session en cours en tant que client participant ; et
des moyens pour recevoir un message d'accord de salve de média d'un serveur de session de commande ; et
des moyens pour envoyer le média demandé, le média demandé étant demandé par le serveur de session de commande, pour distribution aux autres clients participants.

13. Procédé de distribution de média d'un serveur de contenu basé sur le réseau à deux clients ou plus participant à une session de service de type pousser pour parler commandée par un serveur de commande de session, le procédé consistant à :
à la suite de l'établissement de ladite session, envoyer une demande de protocole HTTP du serveur de commande de session au serveur de contenu ;
lors de la réception de ladite demande par le serveur de contenu, identifier le média identifié dans la demande HTTP ; et
délivrer le média identifié du serveur de contenu aux clients participants.

14. Procédé selon la revendication 13, dans lequel ladite session de service de type pousser pour parler est établie en utilisant la signalisation SIP, Session Initiation Protocol.

15. Procédé selon la revendication 13 ou 14 et comprenant l'envoi, de l'un des clients participants audit serveur de commande, d'une demande de salve de média contenant une URL HTTP identifiant le serveur de contenu et, en réponse à la réception de ce message, la génération, au niveau du serveur de commande de session, de ladite demande HTTP et l'envoi de celle-ci au serveur de contenu.

16. Procédé selon l'une quelconque des revendications 13 à 15, dans lequel ladite demande HTTP est une demande HTTP GET.

17. Serveur de commande de session pour une utilisation pour commander une session de service de type pousser pour parler impliquant deux clients participants ou plus, le serveur comprenant :
des moyens pour établir une session entre deux clients participants ou plus ;
des moyens pour recevoir de l'un desdits clients une demande de salve de média contenant une URL HTTP identifiant un serveur de contenu dans lequel le média est mémorisé ;
des moyens pour générer et envoyer audit serveur de contenu une demande HTTP;
des moyens pour recevoir le média dudit serveur de contenu, et pour délivrer le média aux clients participants.

18. Terminal d'utilisateur pour une utilisation dans une session de service de type pousser pour parler impliquant un ou plusieurs autres terminaux de client participants, le terminal comprenant :
des moyens pour envoyer à un serveur de commande une demande de salve de média contenant une URL HTTP identifiant un serveur de contenu dans lequel le média est mémorisé, pendant une session en cours avec un ou plusieurs autres terminaux de clients participants ; et
des moyens pour recevoir le média dudit serveur de contenu par l'intermédiaire dudit serveur de commande.
